# EUROPEAN PATENT APPLICATION

(11) **EP 2 787 455 A1**
(43) Date of publication of application: **08.10.2014**
(21) Application number: 14162406.4
(22) Date of filing: 28.03.2014
(51) Int. Cl.: G06F 17/40, G06F 17/30

(54) **Device and method for processing history data**

(30) Priority: 01.04.2013 KR 20130035136
(71) Applicant: LSIS Co., Ltd., Dongan-gu, Anyang Gyeonggi-do 431-080 (KR)
(72) Inventor: Myung, Jin Hei, 431-080 Anyang-si, Gyeonggi-Do (KR)
(74) Representative: Lang, Johannes

(57) **Abstract**

A method of processing history data is provided. The method includes collecting data; checking state information on a database (DB) record for the collected data; and storing the collected data in a record based on the checked state information, wherein the data stored in the record is stored in the form of a set of data that includes time offset, value and quality.

## Description

### BACKGROUND

The present disclosure relates to a device and method for processing history data.

A supervisory control and data acquisition (SCADA) system is a system in which a remote terminal unit collects receives · records · displays an analog or digital signal on a communication path and a central control system monitors and controls the remote terminal unit.

For example, the system may control and monitor many types of remote facilities and devices such as a power generation · power transmission and distribution facility · a petrochemistry plant, a steel making process, and a factory automation facility, in a centralized manner.

The SCADA system needs management and control on massive data collected from the remote terminal unit and thus builds a database (DB) that may store the massive data.

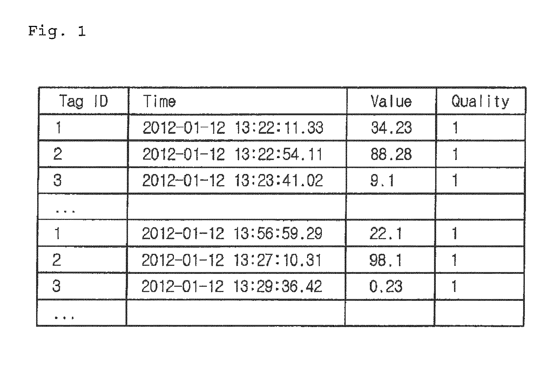

Fig. 1 illustrates a typical structure of a DB for storing the massive data.

Referring to FIG. 1, the massive data collected through a data collecting unit of the SCADA system is sequentially accumulated and stored in one record over time as shown in FIG. 1.

That is, when typically storing data received through the data collecting unit in a DB of a history server, the history server checks Tag ID, Timestamp, Value and Quality information, sequentially accumulates input data and stores the data in one record.

Thus, when managing data with a typical DB, there may be a limitation in that a velocity and time increases when storing and searching massive data as one set of data (Tag ID, Timestamp, Value and Quality) per record is stored in a DB table..

### SUMMARY

Embodiments provide a method and device for processing history data that may efficiently store and manage a plurality of sets that increases over time in processing the history data.

Embodiments also provide a method and device for processing history data that enables stored history data to be searched rapidly and easily.

In one embodiment, a method of processing history data, the method includes collecting data; checking state information on a database (DB) record for the collected data; and storing the collected data in a record based on the checked state information, wherein the data stored in the record is stored in the form of a set of data that includes time offset, value and quality.

Record information may include fields: times to start and end collecting data, number of sets of data, and data.

When the set of data is stored in a record and the number of the set of data exceeds a certain number, a new record may be generated to store the set of data.

When the set of data is stored in a record and a time offset exceeds a preset maximum reference value, a new record may be generated to store the set of data.

The method may further include temporarily storing the collected data, and deleting the temporarily stored data if the data is stored in the record.

In another embodiment, a device for processing history data includes a data collecting unit collecting data generated from devices to be controlled and monitored; a data processing unit generating the collected data in the form of a set of data that includes time offset, value and quality; and a database (DB) storing collected data generated in the set of data.

The DB may include a first storage unit storing information for collecting history data; a second storage unit temporarily storing data collected by the data collecting unit; and a third storage unit storing a set of data generated by the data processing unit.

The third storage unit may store the collected data, based on the size of a set of data or a time offset, in a set of data in an existing record, or may generate a new record and store the new record in a set of data.

The record may include a time to collect data, a number of pieces of collected data, data and data identifier (ID).

The data ID in the record may be set as a DWORD-type serial number.

The number of pieces of data may be generated by counting a number of WORD-type TVQs.

The data processing unit may generate a set of data to store the collected data in a BOLD type.

The details of one or more embodiments are set forth in the accompanying drawings and the description below. Other features will be apparent from the description and drawings, and from the claims.

### BRIEF DESCRIPTION OF THE DRAWINGS

Fig. 1 illustrates a typical structure of a DB for storing massive data.
Fig. 2 is a block diagram of a history server to which an embodiment is applied.
Fig. 3 is a flow chart for explaining the operation of processing data by a history server according to an embodiment.
Fig. 4 illustrates how history data is stored in a DB of a history server according to an embodiment.

### DETAILED DESCRIPTION OF THE EMBODIMENTS

The terms or words used in the detailed description and claims should not be imitatively construed as typical meanings or meanings indicated in dictionaries but should be construed as meanings and concepts matching the technical spirit of the present invention based on the principle that the inventor may properly define the concepts of terms in order to describe his or her invention in the best mode.

Thus, since embodiments described in the detailed description and configurations shown in the drawings are merely examples and do not cover all the technical spirits of an embodiment, it should be understood that there may be various equivalents and variations that may replace them upon filing the present application.

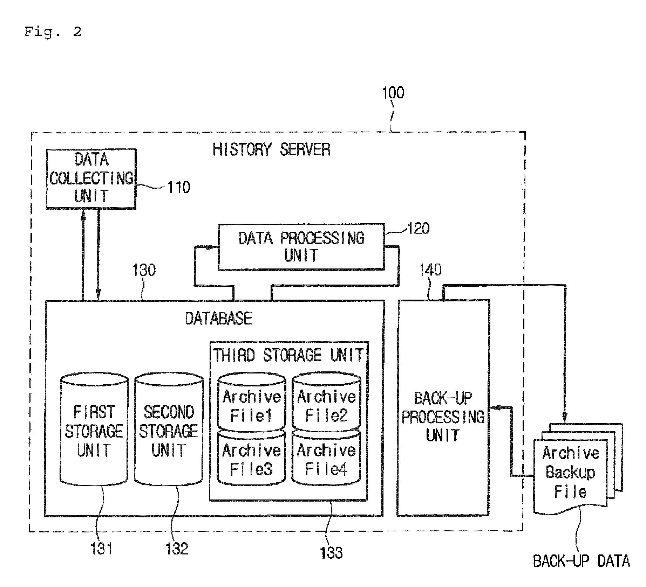

Fig. 2 is a block diagram of a history server to which an embodiment is applied.

Referring to Fig. 2, a history server 100 to which an embodiment is applied may include a data collecting unit 110, a data processing unit 120, a database (DB) 130 and a backup processing unit 140.

The data collecting unit 110 may receive data generated from devices to be controlled and monitored, in real time or regularly. The data collecting unit 110 may include at least one module that may be connected to the devices in a wired manner or wirelessly. The data collecting unit 110 may collect data in real time or regularly while being connected to the devices in a wired manner or wirelessly.

The data processing unit 120 may perform processing, comparing and calculating on data stored in the DB 130 through the data collecting unit 110. The data processing unit 120 according to an embodiment may continuously store history data by tag, a plurality of sets of data (Time Offset, Value, Quality: TVQ) in a BLOB-type field.

The DB 130 may temporarily or permanently store data received from the data collecting unit 110. The DB 130 according to an embodiment may include a first storage unit 131, a second storage unit 132, and a third storage unit 133.

The first storage unit 131 has configuration information that a history server needs when collecting history data. It may store information on a collecting unit for collecting tag data, tag information, and configuration information for managing history data.

The second storage unit 132 may perform a function of temporarily storing data collected through the data collecting unit 110. According to an embodiment, it is possible to temporarily store data collected through the data collecting unit 110 in the second storage unit 132, update record data and then delete data stored in the second storage unit 132.

The third storage unit 133 may sequentially store sets of data according to an embodiment. That is, the third storage unit 133 may store a set of data in an existing record or generate a set of data for data collected through the data collecting unit 110, based on the size or time offset of the set of data.

Although the DB 120 according to an embodiment of the present invention is configured as e.g., a plurality of storage units, the number of storages units may be variable and the DB 120 may be configured as a storage unit.

The backup processing unit 140 may back up collected data, and data stored in the record. The backed-up data may be deleted only by a compulsory delete request signal.

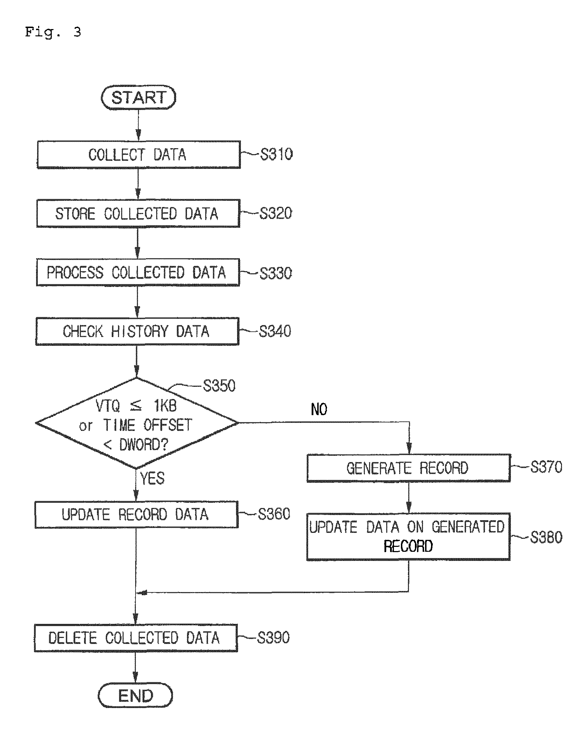

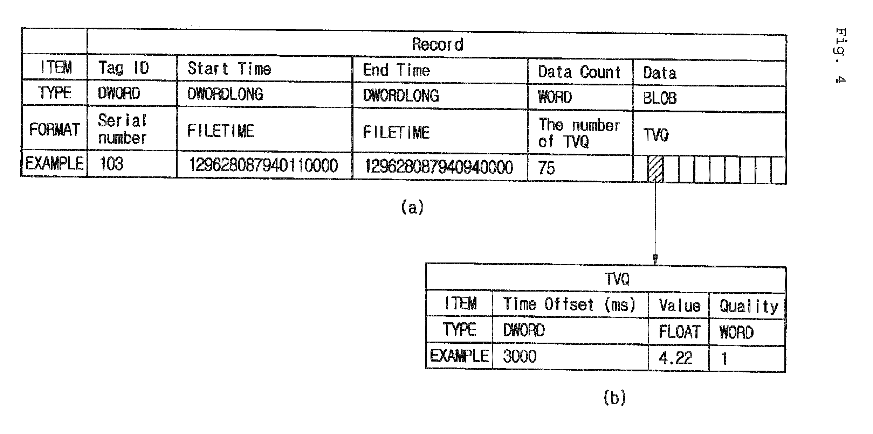

An operation of processing data by a history server with such a configuration is described in detail with reference to Figs. 3 and 4.

Fig. 3 is a flow chart for explaining the operation of processing data by a history server according to an embodiment, and Fig. 4 illustrates how history data is stored in a DB of a history server according to an embodiment.

Referring to Figs. 3 and 4, the data collecting unit 110 may collect data transmitted from the remote terminal unit in real time or regularly in step S310.

The collected data may be temporarily stored in the second storage unit 132 of the DB 130 according to the control of the data processing unit 120 in step S320.

The data processing unit 120 may read and process data temporarily stored in the second storage unit 132 of the DB 130 and generate a set of data to store the processed data in a BOLD type.

The data processing unit 120 may check history data on the processed collected data in step S340.

The data processing unit 120 may determine based on the checked history data whether the size of a record including a plurality of sets of data is less than or equal to 1 KB or whether a time offset exceeds the maximum value of DWORD, in step S350.

The set of data may include time offset, value and quality.

The data processing unit 120 may update data on an existing record according to a determination result in step S360.

Alternatively, it is possible to generate a new record in step S70 and it is possible to update data on a generated record in step S380.

That is, the data processing unit 120 may check history data among data stored in the DB 130, generated and store a record on corresponding history data as shown in Fig. 4.

As shown in Fig. 4A, a record may include times to start and end collecting data, data count representing the number of pieces of data collected in a collection time, collected data, and tag ID of collected data.

An ID included in a record may be set as a DWORD-type serial number. The number of pieces of data collected between the times start and end collecting data may be generated by counting the number of WORD-type TVQs. Collected data corresponding to the number of BLOB-type TVQ sets may be recorded in the data field of the record. For example, for data of the TVQ set recorded in the data field as shown in Fig. 4B, an offset defining a time difference between an initial data collection time (first data collection time) and a following data collection time (second data collection time) may be recorded in a DWORD type. The unit of the time offset may be ms. Also, a value for the data of the TVQ set may be recorded in a FLOAT type and quality may be recorded in a WORD type.

Thus, as described above, data is collected for a certain time and the collected data is recorded as the TVQ set in the record. Also, when the TVQ set exceeds a certain capacity or the time offset is equal to or greater than a threshold, it is possible to generate a new record and store data.

The data processing unit 120 may delete temporarily stored collected data in order to optimize the capacity of the DB when storing data is completed.

Embodiments are mainly described above. However, they are just examples and do not limit the present invention. A person skilled in the art may appreciate that several variations and applications not presented above may be made without departing from the essential characteristic of embodiments. For example, each component specifically represented in embodiments may vary. In addition, it should be construed that differences related to such a variation and such an application are included in the scope of the present invention defined in the following claims.

## Claims

1. A method of processing history data, the method comprising:
collecting data;
checking state information on a database (DB) record for the collected data; and
storing the collected data in a record based on the checked state information,
wherein the data stored in the record is stored in the form of a set of data that includes time offset, value and quality.

2. The method according to claim 1, wherein record information comprises fields: times to start and end collecting data, number of sets of data, and data.

3. The method according to claim 1, wherein when the set of data is stored in a record and the number of the set of data exceeds a certain number, a new record is generated to store the set of data.

4. The method according to claim 1, wherein when the set of data is stored in a record and a time offset exceeds a preset maximum reference value, a new record is generated to store the set of data.

5. The method according to claim 1, further comprising temporarily storing the collected data, and deleting the temporarily stored data if the data is stored in the record.

6. A device for processing history data, the device comprising:
a data collecting unit collecting data generated from devices to be controlled and monitored;
a data processing unit generating the collected data in the form of a set of data that includes time offset, value and quality; and
a database (DB) storing collected data generated in the set of data.

7. The device according to claim 6, wherein the DB comprises:
a first storage unit storing information for collecting history data;
a second storage unit temporarily storing data collected by the data collecting unit; and
a third storage unit storing a set of data generated by the data processing unit.

8. The device according to claim 7, wherein the third storage unit stores the collected data, based on the size of a set of data or a time offset, in a set of data in an existing record, or generates a new record and stores the new record in a set of data.

9. The device according to claim 8, wherein the record comprises a time to collect data, a number of pieces of collected data, data and data identifier (ID).

10. The device according to claim 9, wherein the data ID in the record is set as a DWORD-type serial number.

11. The device according to claim 9, wherein the number of pieces of data is generated by counting a number of WORD-type TVQs.

12. The device according to claim 6, wherein the data processing unit generates a set of data to store the collected data in a BOLD type.
